# EUROPÄISCHE PATENTANMELDUNG

(11) **EP 2 194 624 A1**
(43) Veröffentlichungstag der Anmeldung: **09.06.2010**
(21) Anmeldenummer: 08170485.0
(22) Anmeldetag: 02.12.2008
(51) Int. Cl.: H02G 1/08

(54) **Einzieheinrichtung für ein Kabel in ein bestehendes Rohrnetz**

(71) Anmelder: Swisscom AG, 3050 Bern (CH)
(72) Erfinder: Rubin, Marc, 3309 Zauggenried (CH); Seiler, Thomas, 3006 Bern (CH); Herrmann, Ulrich, 3066 Stettlen (CH)
(74) Vertreter: BOVARD AG

(57) **Zusammenfassung**

Eine Einzieheinrichtung für ein Kabel in ein bestehendes Rohrnetz umfasst ein längsstabiles biegsames Element (2), welches in einem Rohrbereich des Rohrnetzes einschiebbar ist, und auf welches ein Kopfteil (1) aufsetzbar ist. Zum Durchfahren von Bereichen von Biegungen des Rohres ist dieses Kopfteil (1) auslenkbar, auf das biegsame Element (2) ist ein Kupplungsteil (3) aufgesetzt, an welches das einzuziehende Kabel ankoppelbar ist. Das Kopfteil (1) umfasst einen eine Längsform aufweisenden Grundkörper (4), welcher von einer gestreckten Lage in eine gebogene Lage auslenkbar ist. Der Grundkörper (4) ist mit Führungselementen (15) ausgestattet, durch welche mindestens ein Zugelement (14) geführt ist, das von der Biegeachse des Grundkörpers (4) beabstandet ist. Ein Ende des Zugelemente (14) ist am einen Endbereich des Grundkörpers (4) gehalten, während das andere Ende an einem antreibbaren Linearantrieb (13) gehalten ist, der am anderen Endbereich des Grundkörpers (4) befestigt ist. Am Endbereich des Kopfteils (1), der dem biegsamen Element (2) abgewandt ist, sind eine Lichtquelle (17) und eine Kamera (18) angeordnet. Mit dieser Einrichtung lassen sich in einem bestehenden Rohrnetz Abwinklungen und Verzweigungen in der gewünschten Richtung problemlos durchfahren.

## Beschreibung

Die vorliegende Erfindung bezieht sich auf eine Einzieheinrichtung für ein Kabel in ein bestehendes Rohrnetz, umfassend ein längsstabiles, biegsames Element, welches in einen Rohrbereich des Rohrnetzes einschiebbar ist, ein auf das biegsame Element aufsetzbares Kopfteil, das zum Durchfahren von Bereichen von Biegungen des Rohres auslenkbar ist, ein Kupplungsteil, das auf das biegsame Element aufsetzbar ist und an welches das einzuziehende Kabel ankoppelbar ist.

Derartige Einzieheinrichtungen für Kabel in bestehende Rohrnetze sind in vielfältiger Weise bekannt. Hierzu wird insbesondere ein längsstabiles biegsames Element, das auch als Rute bezeichnet wird, beispielsweise in einem Schacht in ein unter der Erde verlegtes Rohr eingeschoben, in welchem Rohr sich bereits Kabel befinden können. Ein derartiges längsstabiles biegsames Element kann über eine bestimmte Strecke in das Rohr eingeschoben werden, wozu in bekannter Weise Einschubvorrichtungen verwendet werden, bis der nächste Schacht oder beispielsweise eine T-förmige Verzweigung erreicht wird. Bei einer derartigen T-förmigen Verzweigung kann es erforderlich sein, dass diese T-förmige Verzweigung freigelegt werden muss, was mit entsprechenden Aushubarbeiten verbunden ist, welche aufwändig und teuer sind. An das in das entsprechende Rohr eingeschobene längsstabile biegsame Element kann das Kabel angekoppelt werden, das durch dieses Rohr eingezogen werden soll, durch zurückziehen über die Einschubvorrichtung des längsstabilen, biegsamen Elementes wird das Kabel in das Rohr eingezogen.

Ein derartiges längsstabiles, biegsames Element eignet sich nur für gerade Rohrbereiche oder Rohrbereiche, die Biegungen mit grösseren Radien aufweisen. Abwinklungen des Rohres oder beispielsweise T-förmige Verzweigungen, insbesondere wenn in einen abgewinkelten Bereich eingefahren werden soll, können mit diesem längsstabilen biegsamen Element nicht durchfahren werden, was den oben beschriebenen grösseren Arbeitsaufwand zur Folge hat.

Es sind auch Einzieheinrichtungen mit längsstabilem biegsamen Element bekannt, an dessen Einstossende ein auslenkbarer Stab aufgesetzt ist, dessen vorderes Ende mit einer beispielsweise kugelförmigen Verdickung ausgestattet ist. Mit einem derartigen längsstabilen biegsamen Element können engere Biegungen im Rohr durchfahren werden, es ist sogar möglich, Abwinklungen des entsprechenden Rohres zu durchfahren, beispielsweise bei einer T-förmigen Verzweigung ist es aber nicht möglich, die gewünschte Verzweigung auszuwählen, wodurch es auch hier erforderlich ist, diese Verzweigung freizulegen.

Die Aufgabe der vorliegenden Erfindung besteht somit darin, eine Einzieheinrichtung für ein Kabel in ein bestehendes Rohrnetz so auszugestalten, dass das einzuschiebende längsstabile, biegsame Element einen Kopfteil aufweist, welcher gesteuert in die gewünschte Richtung auslenkbar ist, so dass Abwinklungen und insbesondere T-förmige Verzweigungen durch das in das Rohrnetz einstossbare längsstabile, biegsame Element problemlos und die richtige Abzweigung wählend durchfahren werden können.

Erfindungsgemäss erfolgt die Lösung dieser Aufgabe dadurch, dass das Kopfteil einen eine Längsform aufweisenden Grundkörper umfasst, welcher von einer gestreckten Lage in eine gebogene Lage auslenkbar ist, welcher Grundkörper mit Führungselementen ausgestattet ist, durch welche mindestens ein Zugelement geführt ist, das von der Biegeachse des Grundkörpers beabstandet ist, welches mindestens eine Zugelement mit dem einen Ende am einen Endbereich des Grundkörpers und mit dem anderen Ende an einem am anderen Endbereich des Grundkörpers angeordneten antreibbaren Linearantrieb gehalten ist, und dass am Endbereich des Kopfteils, der dem biegsamen Element abgewandt ist, eine Lichtquelle und eine Kamera angeordnet sind.

Durch diese Ausgestaltung des auf das biegsame Element aufsetzbaren Kopfteils können Abwinklungen und T-förmige Verzweigungen sowie Kreuzungen problemlos durchfahren werden. Über die Kamera erhält der Bedienungsmann auf seinem Bildschirm ein Bild des durch die Lichtquelle ausgeleuchteten Rohrbereichs, wenn eine Abwinklung erreicht wird, wird der Kopfteil durch Betätigung des entsprechenden Linearantriebs in die richtige Richtung ausgelenkt, der so ausgelenkte Kopfteil gelangt in den entsprechend abgewinkelten Rohrbereich, der Linearantrieb wird gelöst, der Kopfteil für das längsstabile biegsame Element fährt in den ausgewählten Rohrteil ein. Durch diese Ausgestaltung lässt sich das längsstabile biegsame Element durch den entsprechenden Rohrbereich einstossen, bis wieder ein Schacht erreicht ist, das einzuziehende Kabel kann in diesem erreichten Schacht an das längsstabile biegsame Element angekoppelt werden, nachdem der Kopfteil von diesem abgekoppelt wurde, das Kabel kann so durch das Rückziehen des längsstabilen biegsamen Elementes in den gewünschten Rohrbereich gezogen werden, ohne dass bei Verzweigungen oder Abwinklungen gegebenenfalls der entsprechende Rohrabschnitt frei gelegt werden müsste.

In vorteilhafter Weise ist der auslenkbare Grundkörper so ausgebildet, dass er in einer Ebene auslenkbar ist, und dass zwischen Kopfteil und längsstabilem biegsamen Element ein Drehmechanismus angeordnet ist. Dadurch wären höchstens noch zwei Linearantriebe und zwei Zugelemente erforderlich, die bezüglich der Biegeachse symmetrisch am Grundkörper angebracht wären; um jede Richtungsänderung ermöglichen zu können, ist der Drehmechanismus vorgesehen, mit welchem der auslenkbare Grundkörper in die richtige Position gedreht werden kann.

In vorteilhafter Weise ist der auslenkbare Grundkörper mit Federmitteln versehen, durch welche der auslenkbare Grundkörper in die gestreckte Lage drückbar ist. Dadurch können nach der Auslenkung des Grundkörpers zur Richtungsänderung der betätigte Linearantrieb zurückgefahren werden, der ausgelenkte Grundkörper nimmt selbsttätig die gestreckte Lage wieder ein, was das weitere Einstossen in das gewünschte Rohr erleichtert.

Eine weitere vorteilhafte Ausgestaltung der Erfindung besteht darin, dass lediglich ein Einzugelement vorgesehen ist, wodurch der Grundkörper nur einseitig aus der gestreckten Lage auslenkbar ist, und dass der Kopfteil über den Drehantrieb um mindestens ± 180° verdrehbar ist. Dies ergibt einen einfachen Aufbau des auslenkbaren Grundkörpers.

In vorteilhafter Weise ist die voll ausgelenkte Position des auslenkbaren Grundkörpers durch Anschlagelemente begrenzt, wodurch ein zu starkes Auslenken vermieden wird, um das längsstabile, biegsame Element (Rute) anschliessend um die Biegung zu führen.

In vorteilhafter Weise ist der Grundkörper aus einzelnen gelenkig miteinander verbundenen Gliedern gebildet, wodurch eine stabile Bauweise dieses Kopfteils erreichbar ist.

Die Führungselemente sind durch an beiden Endbereichen des jeweiligen Gliedes angebrachte Laschen gebildet, die gegen die Laschen des benachbarten Gliedes gerichteten Stirnflächen bilden zudem die Anschlagelemente, wodurch ein einfacher Aufbau der jeweiligen Glieder zur Erfüllung der geforderten Funktionen erreicht wird.

Eine weitere vorteilhafte Ausgestaltung der Erfindung besteht darin, dass die den Grundkörper bildenden Glieder in der gestreckten Position durch Sperrriegel blockierbar sind, die über Federkraft in die Verriegelungslage drückbar sind. Dadurch wird erreicht, dass beim Einstossen in gerade Bereiche des entsprechenden Rohres eine grosse Stabilität des Kopfteils erreicht wird.

Ein einfaches Entriegeln der Sperrriegel und Auslenken des Kopfteils wird dadurch erreicht, dass jeder Sperrriegel mit einem quer zum Zugelement stehenden Bolzen versehen ist, um welche das Zugelement geführt ist, und welche Bolzen derart angeordnet sind, dass beim Ziehen am Zugelement und dem Erreichen der gestreckten Position des Zugelementes die Sperrriegel entriegelt werden und beim weiteren Ziehen am Zugelement die Glieder auslenken. Dadurch wird zusätzlich eine optimale Funktion des Kopfteils erreicht.

Der Grundkörper kann auch aus einer Blattfeder gebildet sein, auf welcher die Führungselement beabstandet voneinander angebracht sind, was einen besonders einfachen Aufbau des Kopfteils ergibt. In vorteilhafter Weise können zwischen den Führungselementen auf das Zugelement rohrförmige Hülsen aufgesteckt werden, die als Anschlagelemente dienen, was ebenfalls einen einfachen Aufbau zur Folge hat.

Der Grundkörper könnte aber auch aus einem aus elastischem Material bestehenden Längsprofil gebildet sein, in welchem einseitig keilförmige Aussparungen angebracht sind und die stehen gebliebenen Stege als Führungselemente für das Zugelement und als Anschlagelemente dienen. Auch dies ergibt einen einfachen Aufbau des Kopfteils.

In vorteilhafter Weise sind der Linearantrieb und der Drehmechanismus elektrisch angetrieben, deren Versorgungskabel und die Kabel für die Lichtquelle und die Kamera werden durch den Kopfteil und das längsstabile biegsame Element geführt, was in einfacher Weise erreichbar ist.

In vorteilhafter Weise ist der Kopfteil mit dem Drehmechanismus mit dem längsstabilen biegsamen Element über eine lösbare Kupplungsverbindung und Steckverbindung verbindbar, wodurch der Kopfteil in einfacher Weise vom längsstabilen biegsamen Element getrennt und wieder verbunden werden kann und wodurch die Kupplungsverbindung gleichzeitig auch verwendet werden kann für das Kupplungsteil, an welchem das einzuziehende Kabel ankoppelbar ist.

In vorteilhafter Weise ist im Grundkörper ein Gravitationssensor angeordnet, mit welchem die Lage des Grundkörpers bezüglich der Schwerkraft feststellbar ist. Die entsprechende Lage kann der Bedienerperson angezeigt werden, das Feststellen der Lage kann auch dazu ausgenutzt werden, um die Lage des Grundkörpers über den Drehmechanismus bezüglich der Schwerkraft einzustellen.

Ausführungsformen der erfindungsgemässen Einzieheinrichtung werden nachfolgend anhand der beiliegenden Zeichnungen beispielhaft näher erläutert.

Es zeigt
Fig. 1 in räumlicher Darstellung eine erste Ausführungsform des Kopfteils der auf das längsstabile biegsame Element aufgesetzt ist, in der gestreckten Position;
Fig. 2 eine räumliche Ansicht im Schnitt des Kopfteils gemäss Fig. 1;
Fig. 3 eine vergrösserte Schnittdarstellung zweier miteinander verbundener Glieder des Kopfteils der Ausführungsform gemäss Fig. 1 und Fig. 2;
Fig. 4 den Kopfteil der ersten Ausführungsform im vom längsstabilen biegsamen Element gelösten Zustand;
Fig. 5 eine räumliche Schnittdarstellung des Kopfteils gemäss den vorangehenden Figuren mit entriegelten Sperrriegeln;
Fig. 6 eine vergrösserte Darstellung der Verbindung zweier Glieder mit gelöstem Sperrriegel gemäss Fig. 5;
Fig. 7 in räumlicher Darstellung den Kopfteil gemäss Fig. 1 im ausgelenkten Zustand;
Fig. 8 in einer räumlichen Schnittdarstellung den Kopfteil im ausgelenkten Zustand gemäss Fig. 7;
Fig. 9 eine vergrösserte Darstellung der Verbindung zweier Glieder des Kopfteils gemäss Fig. 8;
Fig. 10 eine Ansicht auf den Sperrriegel des Kopfteils gemäss Fig. 1;
Fig. 11 eine Darstellung der Federmitteln, mit welchen die Glieder des Kopfteils gemäss Fig. 1 in die gestreckte Lage bringbar sind;
Fig. 12 eine zweite Ausführungsform eines Kopfteils, im ausgelenkten Zustand;
Fig. 13 eine Ansicht auf den Kopfteil gemäss Fig. 12 in der gestreckten Position;
Fig. 14 eine dritte Ausführungsform eines Kopfteils im ausgelenkten Zustand;
Fig. 15 eine Querschnittdarstellung des Kopfteils gemäss Fig. 14; und
Fig. 16 eine Ansicht auf den Kopfteil gemäss Fig. 14, in der gestreckten Lage.

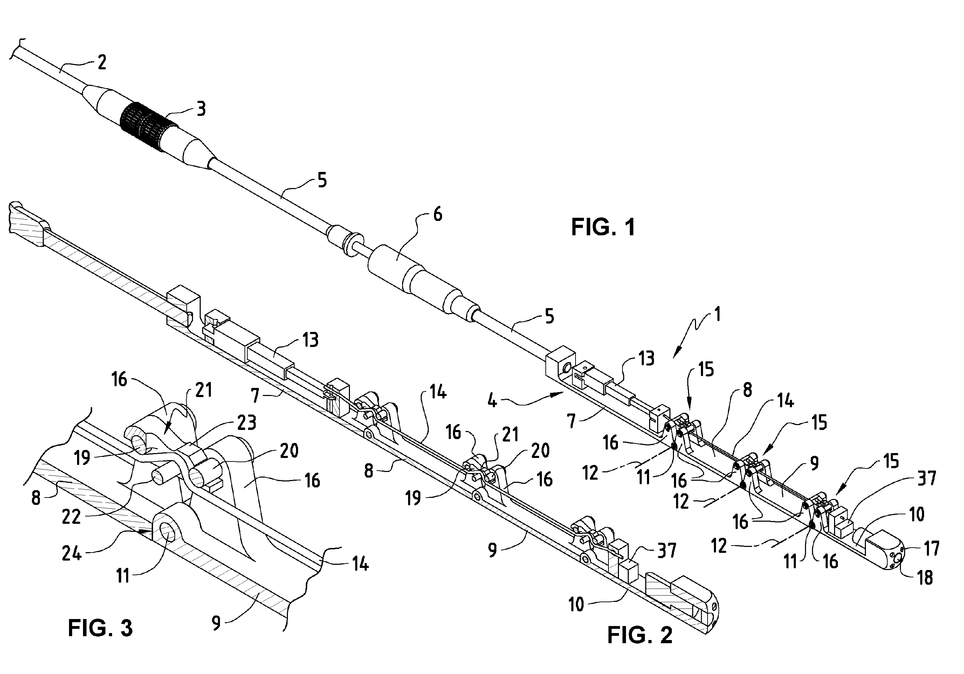

In den Fig. 1-11 ist eine erste Ausführungsform der erfindungsgemässen Einrichtung gezeigt. Aus Fig. 1 ist eine räumliche Darstellung eines Kopfteils 1 zu sehen, welcher auf ein längsstabiles biegsames Element 2 aufgesetzt wird, welches in bekannter Weise über eine nicht dargestellte Einstoss- und Rückzieheinrichtung betätigbar ist. Dieses längsstabile biegsame Element 2 ist zusammen mit dem Kopfteil 1 in ein bestehendes Rohrnetz einstossbar, nach Erreichen der Zielstation wird an diesem längsstabilen biegsamen Element 2 das einzuziehende Kabel angehängt, das längsstabile biegsame Element 2 wird zurückgezogen, wodurch das Kabel in den entsprechenden Rohrbereich des Rohrnetzes eingezogen wird. In diesem Rohrbereich können sich bereits Kabel befinden.

Der Kopfteil 1 ist über ein Kupplungsteil 3, das später noch detailliert beschrieben wird, mit dem längsstabilen biegsamen Element 2 verbunden. Der Kopfteil 1 umfasst einen eine Längsform aufweisenden Grundkörper 4, der über ein Gestänge 5, das ebenfalls biegsam ist, mit dem Kupplungsteil 3 verbunden ist. In dieses Gestänge 5 ist ein bekannter Drehmechanismus 6 eingesetzt, über welchen der Grundkörper 4 gegenüber dem biegsamen Element 2 um die Längsachse verdrehbar ist, wie später noch gesehen wird.

Der hier dargestellte Grundkörper 4 ist aus mehreren Gliedern 7, 8, 9, 10 gebildet, die jeweils über ein Gelenk 11 um zu einander parallel stehende Schwenkachsen 12 schwenkbar sind. Im hier dargestellten Ausführungsbeispiel sind vier Glieder dargestellt, selbstverständlich können auch eine geringere oder eine grössere Anzahl von Gliedern eingesetzt werden. Am Glied 7, welches mit dem Gestänge 5 des Kopfteils 1 verbunden ist, ist ein Linearantrieb 13 befestigt. An diesem Linearantrieb 13 ist das eine Ende eines Zugelementes 14 angebracht, dessen anderes Ende an einer Halterung 15 befestigt ist, welche ihrerseits am Glied 10, das dem biegsamen Element 2 abgewandt ist, fixiert ist. Das Zugelement 14 erstreckt sich entlang der Glieder 7-10, wobei das Zugelement von der Biegeachse des Grundkörpers, welche sich mit den Schwenkachsen 12 zwischen den Gliedern 7-10 schneidet, beabstandet ist. Zur Führung dieses Zugelementes 14, das als flexible Schnur ausgebildet ist, sind am Grundkörper 4 Führungselemente 15 angebracht, die als Laschen 16 ausgebildet sind, welche an den Endbereichen der jeweils benachbarten Glieder angebracht sind. Das Zugelement 14 wird durch entsprechend ausgestaltete Kopfbereiche dieser Laschen 16 geführt, wie nachfolgend noch beschrieben wird.

An dem dem biegsamen Element 2 abgewandten Glied 10 des Grundkörpers 4 ist eine Lichtquelle 17 und eine Kamera 18 angeordnet.

Wie aus den Fig. 2 und 3 entnehmbar ist, ist jeweils zwischen zwei Laschen 16, die jeweils paarweise am Endbereich eines Gliedes 7, 8, 9, 10 angeordnet sind, jeweils ein Achsstück 19 bzw. 20 eingesetzt. Um das eine Achsstück 19 ist ein Sperrriegel 21 schwenkbar angeordnet, der gabelförmig ausgebildet ist. In den gabelförmigen Sperrriegel ist ein Bolzen 22 eingesetzt, welcher die beiden Gabelteile 23 des Sperrriegels 21, von welchen in den Fig. 2 und 3 jeweils nur einer dargestellt ist, miteinander verbindet. Wie insbesondere aus Fig. 3 ersichtlich ist, ist das um das Achsstück 19 verschwenkbare Ende des Sperrriegels 21 klinkenförmig ausgebildet, im in den Fig. 1-3 dargestellten Zustand ist der Sperrriegel 21 somit in das Achsstück 20 eingeklinkt. Durch dieses Einklinken wird erreicht, dass die Glieder 7, 8, 9, 10 in der gestreckten Lage, wie sie in den Fig. 1-3 dargestellt ist, verriegelt ist, ein Verschwenken der einzelnen Glieder um die Schwenkachse 12 wird vermieden. Die gegenseitige gestreckte Lage der einzelnen Glieder 7-10 wird in bekannter Weise durch entsprechend ausgebildete Anschlagflächen 24, die im Bereich der Gelenke an den Gliedern angeformt sind, begrenzt.

Wie insbesondere aus den Fig. 2 und 3 ersichtlich ist, wird das Zugelement unterhalb der Achsstücke 19 und 20 der Laschen 16 geführt, während es zwischen den Gabelteilen 23 des Sperrriegels 21 oberhalb des Bolzens 22 durchgeführt ist.

Wenn nun dieses längsstabile biegsame Element 2 mit dem aufgesetzten Kopfteil 1 durch ein geradlinig verlaufendes Rohrstück eingestossen wird, befindet sich der Grundkörper 4 dieses Kopfteils 1 in der gestreckten und über die Sperrriegel 21 verriegelten Lage. Dadurch kann das biegsame Element 2 mit dem aufgesetzten Kopfteil 1 optimal vorgeschoben werden, die Lichtquelle 17 leuchtet den Bereich des Rohres aus, in welchen das biegsame Element mit Kopfteil eingeschoben wird, über die Kamera 18 wird der Bedienungsperson auf deren Bildschirm ein Bild des Innenraumes des Rohres vermittelt.

Die Versorgung mit Strom der Lichtquelle 17 und der Kamera 18 erfolgt über Kabel, die in bekannter, nicht dargestellter Weise durch den Grundkörper 4, durch das Gestänge 5 und den Drehmechanismus 6 über das Kupplungsteil 3 und das längsstabile biegsame Element 2 zurück zum Bedienungsmann geleitet werden.

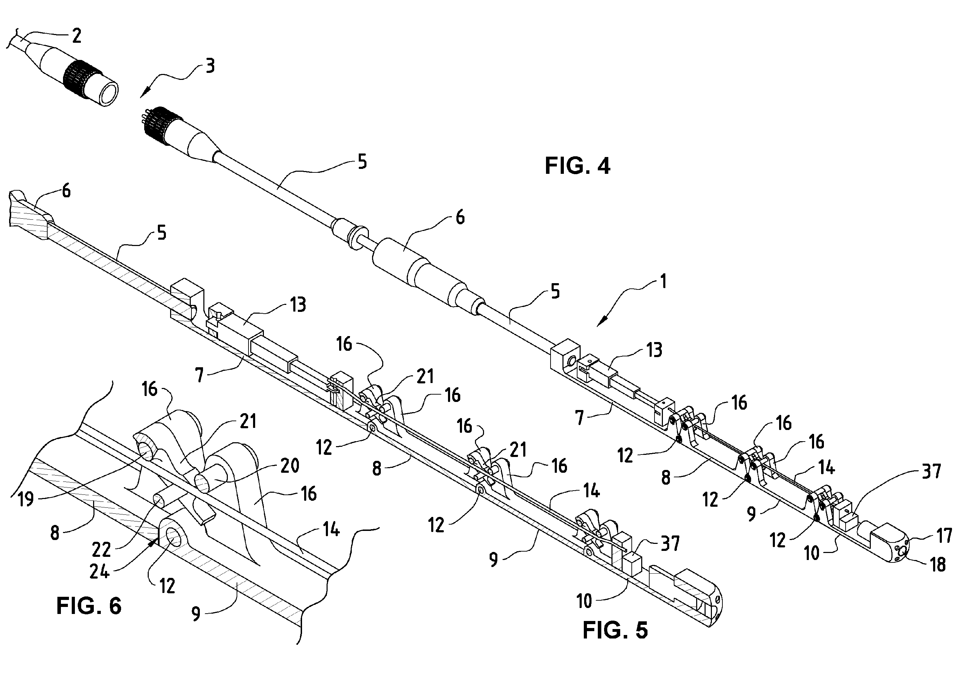

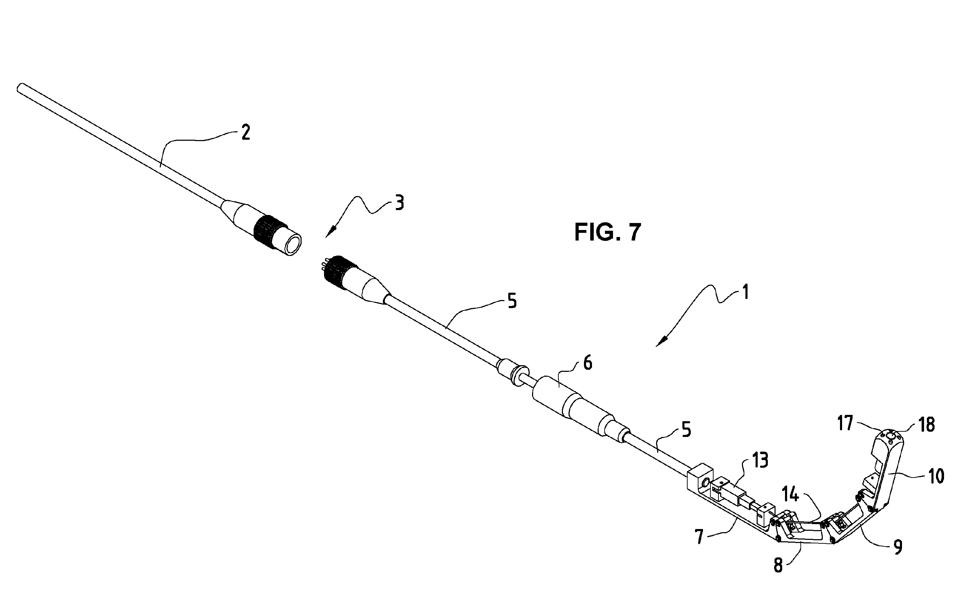

Wenn nun dem Bedienungsmann über die Kamera auf dem Bildschirm vermittelt wird, dass das Rohr, in welches das biegsame Element 2 mit aufgesetztem Kopfteil 1 eingeschoben wird, eine Abwinkelung oder eine Verzweigung aufweist, kann der Linearantrieb 13 betätigt werden. Über diesen Linearantrieb 13 wird das Zugelement 14 gespannt, wie aus den Fig. 4-6 ersichtlich ist. Das Spannen des Zugelementes 14 bewirkt, dass der Sperrriegel 21 aus der verriegelten Position weggeschwenkt wird, wie dies insbesondere aus Fig. 6 ersichtlich ist, das jeweilige Achsstück 20 wird frei gegeben. Bei weiterem Spannen des Zugelementes 14 durch den Linearantrieb 13 werden die einzelnen Glieder 7, 8, 9, 10 gegeneinander verschwenkt, und zwar jeweils um die Schwenkachse 12, wie dies in den Fig. 7-9 dargestellt ist. Dieses Verschwenken erfolgt während des weiteren Vorstossens des längsstabilen biegsamen Elementes 2 mit dem Kopfteil 1 in den abgewinkelten oder Verzweigungsbereich des Rohres, der ausgeschwenkte Grundkörper wird in den abgewinkelten bzw. abzweigenden Ast des Rohres eingeführt. Nachdem diese Einführung erfolgt ist, kann über den Linearantrieb 13 das Zugelement 14 wieder losgelassen werden, beim weiteren Vorschieben führt der Grundkörper 4, welcher von der Kopfseite her wieder die gestreckte Position einnehmen kann, das nachfolgende längsstabile biegsame Elemente 2 in das entsprechende Rohrstück ein. Wenn der Grundkörper 4 wieder die gestreckte Lage einnimmt, gelangen die Sperrriegel 21 wieder in die verriegelte Position, wie dies den Fig. 1-3 entnehmbar ist, der Grundkörper 4 ist somit wieder in der gestreckten Lage verriegelt, das weitere Vorschieben kann weiter geführt werden, bis das Ziel des Einschiebens bzw. eine nächste Abwinkelung oder Verzweigung erreicht wird, wo der vorgängig beschriebene Vorgang wiederholt werden kann.

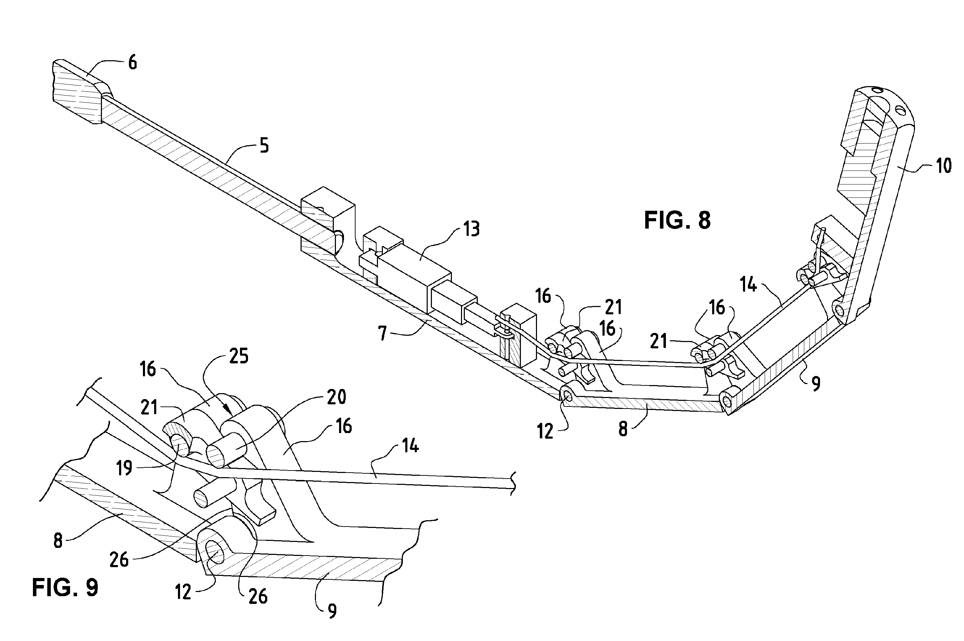

Wie insbesondere aus den Fig. 8 und 9 entnommen werden kann, wird die ausgeschwenkte Lage des Grundkörpers durch Anschlagelemente 25 begrenzt. Diese Anschlagelemente 25 werden durch die Laschen 16 der Glieder 7-10 gebildet, wobei jeweils zwei einander benachbarte Stirnflächen 26 der Laschen 16 von jeweils zwei Gliedern 7-10 gegeneinander zur Anlage kommen, wie dies insbesondere aus Fig. 9 ersichtlich ist, wodurch die voll ausgeschwenkte Lage des Grundkörpers definiert ist.

Diese voll ausgeschwenkte Lage des Grundkörpers 4 beschreibt somit einen Bogen, mit welchem gewährleistet ist, dass dieser gebogene Grundkörper 4 in korrekter Weise in den abgewinkelten bzw. abgezweigten Rohrbereich einfahren kann, und dass danach das biegsame Element 2 folgen kann, ohne dass es zu irgendwelchen Ausknickungen kommt.

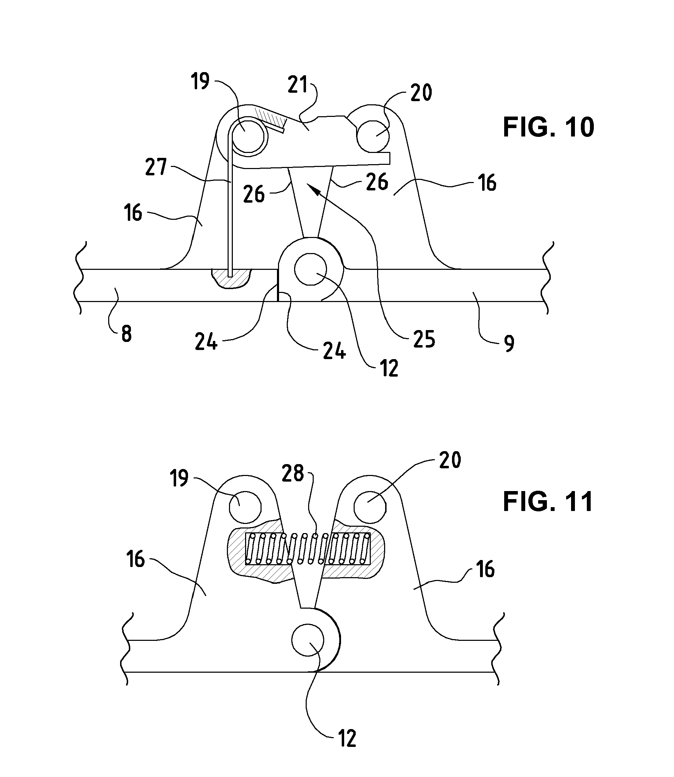

Aus Fig. 10 ist ersichtlich, dass der Sperrriegel, der um das Achsstück 19 einer Lasche 16 eines der Glieder 7-9 über eine Feder 27 vorgespannt ist, derart, dass der Sperrriegel 21 in die verriegelte Position gedrückt wird. Zum Lösen dieses Sperrriegels aus der verriegelten Position, wie dies vorgängig beschrieben worden ist, muss somit die Kraft dieser Feder 27 überwunden werden. Aus dieser Fig. 10 sind ebenfalls die Anschlagflächen 24 ersichtlich, welche die gestreckte Lage der Glieder 7-10 definieren, zudem sind auch die Anschlagelemente 25 ersichtlich, dargestellt durch die Stirnflächen 26 der Laschen, welche die voll ausgelenkte Position des Grundkörpers 4 definieren.

Aus Fig. 11 ist ersichtlich, dass zwischen den einzelnen Gliedern 7-10 des Grundkörpers 4 im Bereich der Laschen 16 eine Druckfeder 28 eingesetzt ist. Diese Druckfeder 28 bewirkt, dass der Grundkörper 4 bzw. die einzelnen Glieder 7-10 bei frei gegebenen Zugelement 14 in die voll gestreckte Position gedrückt werden, wie dies den Fig. 1-3 entnehmbar ist.

Wie insbesondere den Fig. 4 und 7 entnommen werden kann, lässt sich der Kopfteil 1 über das Kupplungsteil 3 vom längsstabilen biegsamen Element 2 lösen. Dieses Kupplungsteil 3 ist hierzu in bekannter Weise mit einer Steckeinrichtung zur Verbindung der Kabel und einer Führung ausgestattet, wobei sich die Steckeinrichtung im gekuppelten Zustand innerhalb der Führung befindet, und wobei der gekuppelte Zustand durch einen Gewindering fixierbar ist. Derartige Kupplungseinrichtungen sind in vielfältiger Weise bekannt.

Durch die Ausgestaltung des Grundkörpers 4 und der schwenkbaren Verbindungen der Glieder 7-10 mit den jeweiligen Schwenkachsen 12 kann der Grundkörper 4 nur in einer Ebene ausgelenkt werden, die senkrecht zu den Schwenkachsen 12 steht, und zwar nur einseitig. Um dadurch aber in alle Richtungen gerichtete Abwinkelungen und Verzweigungen durchfahren zu können, kann der Grundkörper 4 bezüglich des längsstabilen biegsamen Elementes 2 über den Drehmechanismus 6 jeweils um mindestens ± 180° verdreht werden. Der Kopfteil 1 mit dem Grundkörper 4 kann somit in gerader Richtung durch ein Rohr auf eine Abwinkelung oder Verzweigung zugefahren werden, über die Kamera kann festgestellt werden, in welche Richtung der Grundkörper ausgelenkt werden muss, vor der Auslenkung kann der Grundkörper über den Drehmechanismus 6 in die richtige Lage gedreht werden, damit der Grundkörper in die richtige Richtung und die richtige Abwinkelung oder Verzweigung des Rohres einfahren kann. Dieser Drehmechanismus 6 ist ein handelsüblicher, elektrisch antreibbarer Drehmechanismus, die zur Versorgung erforderlichen Kabel werden ebenfalls über das Gestänge 5, den Kupplungsteil 3 und das längsstabile biegsame Element 2 zur Bedienerperson geführt.

Auch der Linearantrieb 13 ist ein handelsübliches bekanntes Produkt, das beispielsweise über eine einen Elektromotor antreibbare Spindel betätigbar ist.

Zusätzlich kann in den Grundkörper noch eine Einrichtung eingesetzt werden, welche der Bedienungsperson anzeigt, in welcher Ausrichtung sich der Grundkörper, beispielsweise bezüglich der Schwerkraft, befindet. Ein derartiger Gravitationssensor 37, der in den Fig. 1, 2, 4, 5, 12 und 13 schematisch dargestellt ist, zeigt der Bedienerperson die Ausrichtung des Grundkörpers 4 bezüglich der Schwerkraft im Rohrnetz an, dieser Gravitationssensor 37 kann auch dazu verwendet werden, über eine entsprechende Ansteuerung des Drehmechanismus den Grundkörper bezüglich der Schwerkraft und nach dem Durchfahren von Biegungen oder Abzweigungen gleich ausgerichtet zu halten.

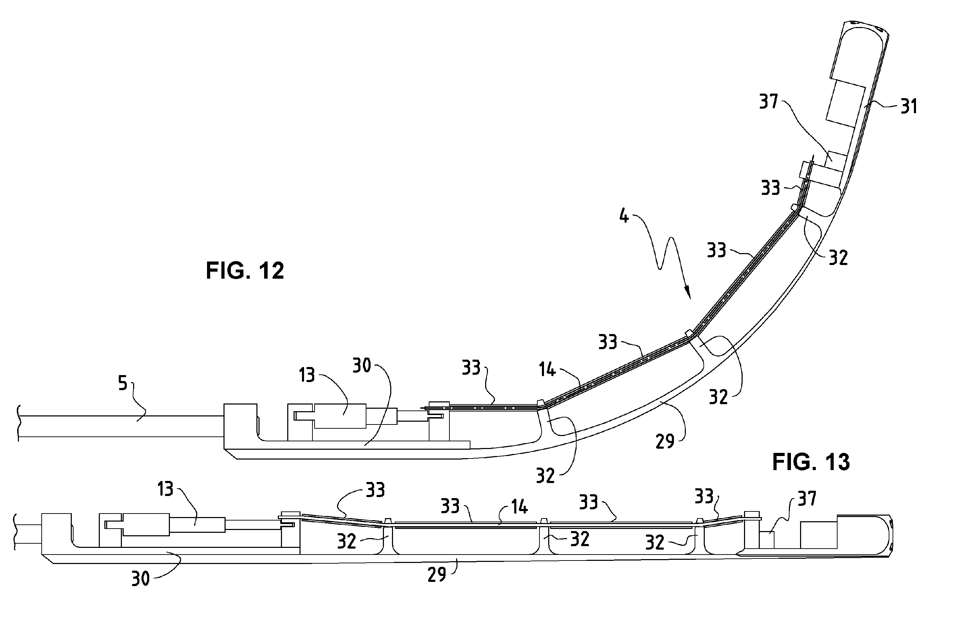

Eine zweite Ausführungsform der erfindungsgemässen Einrichtung ist in den Fig. 12 und 13 dargestellt. Der Grundkörper 4 des Kopfteils 1 ist aus einer Blattfeder 29 gebildet, die auf einem am Gestänge 5 befestigten Glied 30 angebracht ist. Auf diesem Glied 30 ist wiederum ein Linearantrieb 13 befestigt, der dem vorgängig beschriebenen Linearantrieb entspricht. An diesem Linearantrieb ist ebenfalls ein Zugelement 14 gehalten, dessen anderes Ende am Kopfglied 31 gehalten ist, welches am anderen Ende der Blattfeder 29 befestigt ist. Dieses Kopfglied 31 ist entsprechend dem Glied 10 der vorgängig beschriebenen Ausführungsform ausgebildet, ausgestattet mit Lichtquellen und Kamera. Auf der Blattfeder 29 sind beabstandet voneinander Führungselemente 32 angebracht, durch welche das Zugelement 14 geführt ist, beabstandet von der Blattfeder 29.

Im Ruhezustand, das heisst bei entlastetem Zugelement 14 bzw. ausgefahrenem Linearantrieb 13 nimmt die Blattfeder 29 die gestreckte Form ein, wie dies aus Fig. 13 ersichtlich ist. Über die Länge des Zugelementes 14 und die Ausfahrposition des Linearantriebs 13 kann die gestreckte Lage der Blattfeder 29 begrenzt werden, ein Ausfedern über die gestreckte Lage hinaus ist somit unmöglich. Auf das Zugelement 14 aufgesteckt werden rohrförmige Hülsen 33, die eine derartige Länge aufweisen, dass, wenn die Endbereiche dieser rohrförmigen Hülsen zur Anlage an den Führungselementen 32 kommen, die voll ausgelenkte Lage des Grundkörpers 4 erreicht ist. Diese rohrförmigen Hülsen 33 dienen somit als Anschlagelemente.

Die Blattfeder 29 kann so ausgebildet sein, dass sie im Bereich des Gliedes 30 eine grössere Dicke aufweist als gegen das Kopfglied 31 hin, wodurch die Biegesteifigkeit gegen das Kopfglied 31 hin dieser Blattfeder 29 abnehmend ist. Dadurch kann ein verbessertes Einfahren in abgewinkelte Rohrbereiche oder Abzweigungen davon erreicht werden. Die Bedienung dieser zweiten Ausführungsform entspricht derjenigen der ersten Ausführungsform, auf ein nochmaliges Beschreiben kann deshalb verzichtet werden.

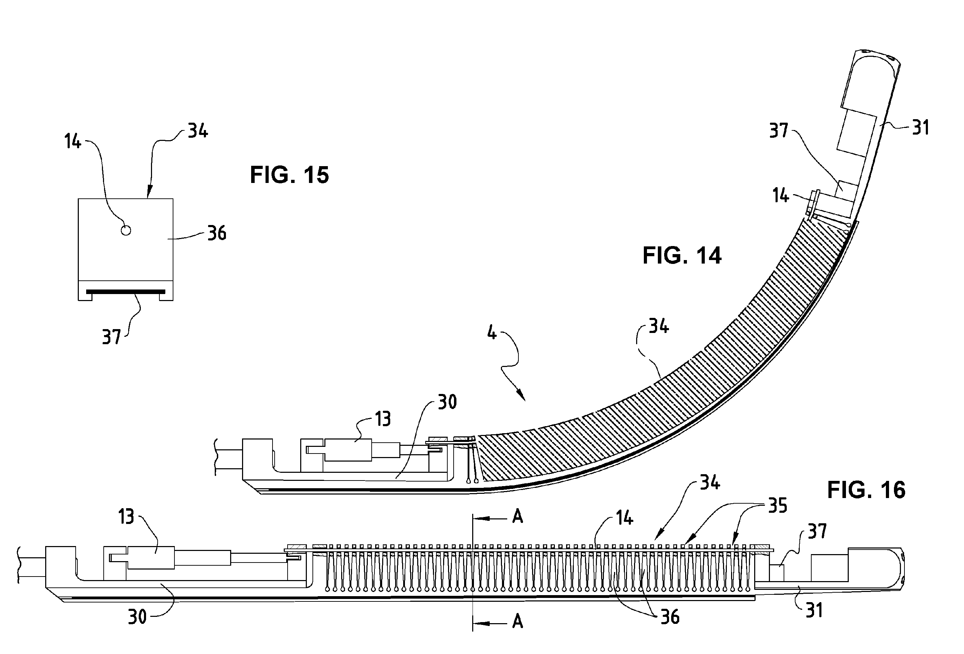

Eine dritte Ausführungsform der erfindungsgemässen Einrichtung ist in den Fig. 14 bis 16 dargestellt. Als Grundkörper wird hierbei ein aus einem elastischen Material bestehendes Längsprofil 34 verwendet, in welchem einseitig keilförmige Aussparungen 35 angebracht sind. Die stehen gebliebenen Stege 36 dienen als Führungselemente für das Zugelement 14, das durch entsprechende Ausnehmungen in diesen Stegen 36 geführt ist. Das Zugelement 14 kann wiederum durch einen Linearantrieb 13 betätigt werden, beim Ziehen an diesem Zugelement wird das Längsprofil 34 federnd ausgelenkt, wie dies aus Fig. 14 ersichtlich ist, soweit, bis die Stege 36 aneinander anliegen und somit als Anschlagelemente dienen. Zur Verstärkung der Biegefestigkeit kann im Längsprofil 34 noch ein Federblatt 37 eingesetzt werden, wie dies aus Fig. 15 ersichtlich ist.

Auch hier ist die Funktionsweise und die Bedienungsweise dieser Einrichtung dieselbe, wie sie zur ersten Ausführungsform beschrieben worden ist, so dass auch hier auf eine nochmalige Beschreibung verzichtet werden kann.

Selbstverständlich können zumindest die Grundkörper 4 aller drei hier vorgängig dargestellten Ausführungsformen der Erfindung mit einer Schutzhülle versehen werden, die beispielsweise aus einem elastischen Schlauch besteht, wodurch sämtliche mechanischen Elemente insbesondere vor Verschmutzung geschützt sind.

Mit dieser Erfindung wird eine Einzieheinrichtung für Kabel zur Verfügung gestellt, mit welcher es möglich ist, in bestehende Rohrnetze ein längsstabiles biegsames Element mit aufgesetztem Kopfteil einzufahren, wobei Abwinkelungen und Verzweigungen in diesem Rohrnetz in der gewünschten Weise überwunden werden können. Nach dem Erreichen des Zielortes kann das Kopfteil in einfacher Weise vom längsstabilen biegsamen Element abgekoppelt werden, entsprechend kann das einzuziehende Kabel auf dieses längsstabile biegsame Element aufgekoppelt werden, das längsstabile biegsame Element wird dann zurückgezogen, wodurch das Kabel in der gewünschten Weise in das bestehende Rohrnetz eingezogen wird.

## Patentansprüche

1. Einzieheinrichtung für ein Kabel in ein bestehendes Rohrnetz, umfassend ein längsstabiles, biegsames Element (2), welches in einen Rohrbereich des Rohrnetzes einschiebbar ist, ein auf das biegsame Element (2) aufsetzbares Kopfteil (1), das zum Durchfahren von Bereichen von Biegungen des Rohres auslenkbar ist, ein Kupplungsteil (3), das auf das biegsame Element (2) aufsetzbar ist und an welches das einzuziehende Kabel ankoppelbar ist, **dadurch gekennzeichnet, dass** das Kopfteil (1) einen eine Längsform aufweisenden Grundkörper (4) umfasst, welcher von einer gestreckten Lage in eine gebogene Lage auslenkbar ist, welcher Grundkörper (4) mit Führungselementen (15) ausgestattet ist, durch welche mindestens ein Zugelement (14) geführt ist, das von der Biegeachse des Grundkörpers (4) beabstandet ist, welches mindestens eine Zugelement (14) mit dem einen Ende am einen Endbereich des Grundkörpers (4) und mit dem anderen Ende an einem am anderen Endbereich des Grundkörpers (4) angeordneten antreibbaren Linearantrieb (13) gehalten ist, und dass am Endbereich des Kopfteils (1), der dem biegsamen Element (2) abgewandt ist, eine Lichtquelle (17) und eine Kamera (18) angeordnet sind.

2. Einzieheinrichtung für ein Kabel in ein bestehendes Rohrnetz nach Anspruch 1, **dadurch gekennzeichnet, dass** der auslenkbare Grundkörper (4) so ausgebildet ist, dass er in einer Ebene auslenkbar ist, und dass zwischen Kopfteil (1) und längsstabilem, biegsamem Element (2) ein Drehmechanismus (6) angeordnet ist.

3. Einzieheinrichtung für ein Kabel in ein bestehendes Rohrnetz nach Anspruch 1 oder 2, **dadurch gekennzeichnet, dass** der auslenkbare Grundkörper (4) mit Federmitteln (28) versehen ist, durch welche der auslenkbare Grundkörper (4) in die gestreckte Lage drückbar ist.

4. Einzieheinrichtung für ein Kabel in ein bestehendes Rohrnetz nach Anspruch 2 oder 3, **dadurch gekennzeichnet, dass** ein Zugelement (14) vorgesehen ist, wodurch der Grundkörper (4) nur einseitig aus der gestreckten Lage auslenkbar ist, und dass der Kopfteil (1) über den Drehantrieb (6) um mindestens ±180° verdrehbar ist.

5. Einzieheinrichtung für ein Kabel in ein bestehendes Rohrnetz nach einem der Ansprüche 1 bis 4, **dadurch gekennzeichnet, dass** die voll ausgelenkte Position des auslenkbaren Grundkörpers (4) durch Anschlagelemente (25) begrenzt ist.

6. Einzieheinrichtung für ein Kabel in ein bestehendes Rohrnetz nach einem der Ansprüche 2 bis 5, **dadurch gekennzeichnet, dass** der Grundkörper aus einzeln gelenkig miteinander verbundenen Gliedern (7, 8, 9, 10) gebildet ist.

7. Einzieheinrichtung für ein Kabel in ein bestehendes Rohrnetz nach Anspruch 6, **dadurch gekennzeichnet, dass** die Führungselemente (15) durch an beiden Endbereichen des jeweiligen Gliedes (7, 8, 9, 10) angebrachte Laschen (16) gebildet sind, und dass die gegen die Laschen (16) des benachbarten Gliedes (7, 8, 9, 10) gerichteten Stirnflächen (26) die Anschlagelemente bilden.

8. Einzieheinrichtung für ein Kabel in ein bestehendes Rohrnetz nach Anspruch 6 oder 7, **dadurch gekennzeichnet, dass** die den Grundkörper (4) bildenden Glieder (7, 8, 9, 10) in der gestreckten Position durch Sperrriegel (21) blockierbar sind, die über Federkraft (27) in die Verriegelungslage drückbar sind.

9. Einzieheinrichtung für ein Kabel in ein bestehendes Rohrnetz nach Anspruch 8, **dadurch gekennzeichnet, dass** jeder Sperrriegel (21) mit einem quer zum Zugelement (14) stehenden Bolzen (22) versehen ist, um welche das Zugelement (14) geführt ist, und welche Bolzen (22) derart angeordnet sind, dass beim Ziehen am Zugelement (14) und dem Erreichen der gestreckten Position des Zugelementes (14) die Sperrriegel (21) entriegelt werden und beim weiteren Ziehen am Zugelement (14) die Glieder (7, 8, 9, 10) auslenken.

10. Einzieheinrichtung für ein Kabel in ein bestehendes Rohrnetz nach einem der Ansprüche 2 bis 5, **dadurch gekennzeichnet, dass** der Grundkörper (4) aus einer Blattfeder (29) gebildet ist, auf welcher die Führungselemente (32) beabstandet voneinander angebracht sind.

11. Einzieheinrichtung für ein Kabel in ein bestehendes Rohrnetz nach Anspruch 10, **dadurch gekennzeichnet, dass** zwischen den Führungselementen (32) auf das Zugelement (14) rohrförmige Hülsen (33) aufgesteckt sind, die als Anschlagelemente dienen.

12. Einzieheinrichtung für ein Kabel in ein bestehendes Rohrnetz nach einem der Ansprüche 2 bis 5, **dadurch gekennzeichnet, dass** der Grundkörper (4)aus einem aus elastischem Material bestehendem Längsprofil (34) gebildet ist, in welchem einseitig keilförmige Aussparungen (35) angebracht sind und die stehen gebliebenen Stege (36) als Führungselemente für das Zugelement (14) und als Anschlagelemente dienen.

13. Einzieheinrichtung für ein Kabel in ein bestehendes Rohrnetz nach einem der Ansprüche 2 bis 12, **dadurch gekennzeichnet, dass** der Linearantrieb (13) und der Drehmechanismus (6) elektrisch angetrieben sind, und dass deren Versorgungskabel und die Kabel für die Lichtquelle (17) und die Kamera (18) durch den Kopfteil (1) und das längsstabile biegsame Element (2) geführt sind.

14. Einzieheinrichtung für ein Kabel in ein bestehendes Rohrnetz nach einem der Ansprüche 2 bis 13, **dadurch gekennzeichnet, dass** der Kopfteil (1) mit dem Drehmechanismus (6) mit dem längsstabilen biegsamen Element (2) über eine lösbare Kupplungsverbindung und Steckerverbindung (3) verbindbar ist.

15. Einzieheinrichtung für ein Kabel in ein bestehendes Rohrnetz nach einem der Ansprüche 1 bis 14, **dadurch gekennzeichnet, dass** im Grundkörper (4) ein Gravitationssensor (37) angeordnet ist, mit welchem die Lage des Grundkörpers (4) bezüglich der Schwerkraft feststellbar ist.
